(19) Europäisches Patentamt
European Patent Office
Office européen des brevets

(11) Veröffentlichungsnummer : **0 060 455**
**B1**

(12) # EUROPÄISCHE PATENTSCHRIFT

(45) Veröffentlichungstag der Patentschrift : **04.07.84**

(51) Int. Cl.³ : **C 23 F 11/16**, C 23 F 11/14, C 23 F 11/12, C 10 M 1/38

(21) Anmeldenummer : **82101713.4**

(22) Anmeldetag : **05.03.82**

(54) **Inhibitoren gegen die Korrosion von $CO_2$ und $H_2S$ in Wasser-in-Öl-Emulsionen.**

(30) Priorität : **14.03.81 DE 3109827**

(43) Veröffentlichungstag der Anmeldung : **22.09.82 Patentblatt 82/38**

(45) Bekanntmachung des Hinweises auf die Patenterteilung : **04.07.84 Patentblatt 84/27**

(84) Benannte Vertragsstaaten : **DE FR GB NL**

(56) Entgegenhaltungen :
**DE-A- 2 528 551**
**DE-A- 2 720 312**
**DE-B- 1 181 985**
**DE-B- 1 290 280**
**US-A- 3 062 612**
**US-A- 3 687 847**
**US-A- 3 736 098**
**US-A- 3 891 470**
**US-A- 4 238 350**

(73) Patentinhaber : **BASF Aktiengesellschaft**
**Carl-Bosch-Strasse 38**
**D-6700 Ludwigshafen (DE)**

(72) Erfinder : **Oppenlaender, Knut, Dr.**
**Otto-Dill-Strasse 23**
**D-6700 Ludwigshafen (DE)**
Erfinder : **Stork, Karl, Dr.**
**Reutersgarten 1**
**D-6840 Lampertheim (DE)**
Erfinder : **Barthold, Klaus, Dr.**
**Paulusbergstrasse 4**
**D-6800 Mannheim (DE)**

**EP 0 060 455 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Inhibitoren auf der Basis von Imidazolinderivaten, die gegen die Korrosion durch $CO_2$ und $H_2S$ (« Sauergas ») beim Transport und Lagern von Rohölen, die i. a. als Wasser-, insbesondere Salzwasser-in-Öl-Emulsionen vorliegen, wirken.

Es ist bekannt und geübte Praxis, bei der Ölförderung, dem Transport und der Lagerung des Öls durch Injizieren eine Lösung oder Dispersion von Korrosionsinhibitoren in das Öl einzubringen, so daß sich auf der Oberfläche der mit dem Öl in Berührung kommenden Metallteile eine Schutzschicht ausbildet.

Die DE-OS 28 46 979 lehrt für diese Zwecke Korrosionsinhibitoren, die aus einem Imidazolinsalz, einem öllöslichen Lösungsmittel für das Imidazolinsalz und einem Kohlenwasserstofföl bestehen.

Es hat sich jedoch gezeigt, daß gerade bei salzwasserhaltigen Wasser-in-Öl-Emulsionen (im folgenden kurz « W/O-Emulsionen » genannt) Imidazolinsalze, wie sie in der genannten Literaturstelle beschrieben sind, die Korrosion von $H_2S$ und $CO_2$ nocht nicht genügend unterdrücken. Außerdem ist die Anwendung der Imidazoline hier insofern kompliziert, als sie zusammen mit spezifischen Lösungsmitteln und dem Kohlenwasserstofföl eingesetzt werden müssen, d. h., der Aufwand für ihren Einsatz ist zu groß.

Das Ziel der Erfindung bestand in der Auffindung von Inhibitoren, die in einfacher Weise dosierbar sind, und die einen optimalen Schutz gegen die Korrosion durch $H_2S$ und $CO_2$ vornehmlich in Salzwasser-in-Öl-Emulsionen gewährleisten.

Dieses Ziel wurde überraschenderweise mit Reaktionsprodukten von bestimmten Imidazolinderivaten mit elementarem Schwefel erreicht, wie sie gemäß dem Anspruch definiert sind.

Aus der US-PS 3 062 612 ist ein Verfahren zur Verhinderung der Korrosion von Eisen gegen Säurekorrosion bekannt, bei dem man dem korrodierenden Medium feinverteilten Schwefel zusammen mit u. a. langkettigen Fettsäuren, aliphatischen Aminen bzw. quaternären Ammoniumsalzen dieser Amine, Imidazolinen oder organischen Sulfiden zusetzt. Abgesehen davon, daß dieser Literaturstelle eine andere Aufgabe zugrundeliegt — es werden nur für wäßrige saure Lösungen Korrosionsschutzmittel beschrieben, nicht aber für Wasser-in-Öl-Emulsionen, bei denen die Frage der Löslichkeit eine entscheidende Rolle mitspielt —, wird beispielhaft von den Imidazolinen lediglich Ethoxystearylimidazolin neben anderen Aminen genannt ; diejenigen Imidazolinderivate, die erfindungsgemäß als Komponente A in Betracht kommen, finden sich an keiner Stelle der Publikation.

Zudem hat sich gezeigt, daß eine Mischung aus elementarem Schwefel gezeigt, daß eine Mischung aus elementarem Schwefel und Ethoxystearylimidazolin bei einem erfindungsgemäßen Einsatz in einer $H_2S$-haltigen Salzwasser-in-Öl-Emulsion völlig unbefriedigende Ergebnisse hinsichtlich des Korrosionschutzes erbringt.

Die Komponente A des erfindungsgemäßen Produkts ist das Imidazolin der Formel I oder dessen Vorprodukts ist das Imidazolin der Formel I oder dessen Vorprodukt, das der Formel Ia gehorcht.

Hierbei bedeutet $R^1$ einen langkettigen Alkyl- oder Alkenylrest mit 6 bis 22, vorzugsweise 8 bis 17 C-Atomen und X kann Hydroxyl, die Aminogruppe oder eine Ammoniumsalzgruppe eines Orthophosphorsäuredialkylesters bedeuten, wobei die dem Ester zugrundeliegenden Alkohole 4 bis 18, vorzugsweise 7 bis 17 C-Atome enthalten.

Die Herstellung der Imidazolinderivate gehört zum Stand der Technick und bedarf keiner detaillierten Erläuterung. Man setzt üblicherweise Säuren der Formel $R^1COOH$ mit Diethylentriamin oder Aminoethylethanolamin bei ca. 130 bis 170 °C um und erhält zunächst das Säureamid der Formel Ia, das schon für sich verwendet werden kann. $R^1$ hat hierbei die für Formel I geltende Bedeutung.

Anschließend setzt man bei ca 190 bis 250 °C weiter um und erhält das Imidazolin, das dann durch weitere Umsetzung mit dem Dialkylorthophosphorsäureester in das Ammoniumsalz überführt werden kann, wenn in der ersten Stufe die Säure mit Diethylentriamin umgesetzt worden ist.

Säuren der Formel $R^1COOH$ sind z. B. 2-Ethylhexansäure, Nonansäure, Ölsäure, Stearinsäure, Laurinsäure, Elaidinsäure sowie Gemische natürlicher Fettsäuren, wie Cocos- oder Talgfettsäure.

Als Orthophosphorsäurediester kommen vor allem solche in Betracht, die sich vom Amylalkohol, n-Hexanol, n-Heptanol, n-Octanol, 2-Ethylhexanol, Nonanolen, Decanolen und Isotridecanol, Stearylalkohol, Oleylalkohol sowie den aus der Oxosynthese stammenden $C_9/C_{11}$- und $C_{13}/C_{15}$-Schnitten herleiten. Auch die aus der Ziegler-Synthese stammenden $C_8/C_{10}$, $C_{10}/C_{12}$ und $C_{14}/C_{16}$-Alkoholgemische seien an dieser Stelle genannt.

Besonders wertvoll sind Imidazoline oder Imidazoliniumphosphatestersalze, die sich von den $C_{12}$- bis $C_{20}$-Carbonsäuren herleiten, z. B. Verbindungen der Formeln

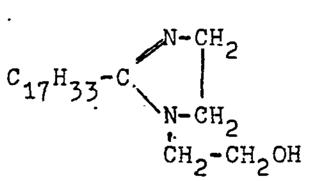

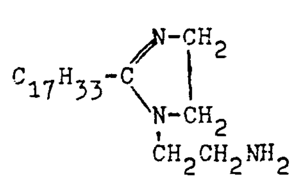

und

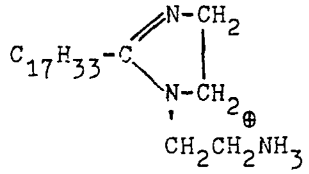

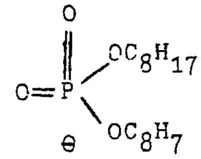

sowie die entsprechenden $C_{17}H_{35}$-Derivate.

Die Imidazolin-Derivate bzw. deren Vorprodukte (A) werden anschließend mit Schwefel (B) der zweckmäßigerweise in kolloidaler Form, (d. h. als Schwefelblume) vorliegen soll, abgemischt und nach der Abmischung unter Erhitzen auf 100 bis 200 °C 1 bis 3 Stunden zur Reakton gebracht.

Als Reaktionspartner ist der Schwefel zusammen mit den Imidazolinen klar löslich. Das Gewichtsverhältnis A : B beträgt 100 : 1 bis 2 : 1, vorzugsweise 100 : 1 bis 4 : 1.

Die so erhaltenen Kompositionen, die in freier Form den W/O-Emulsionen zugegeben werden können, bieten einen optimalen Schutz gegen $H_2S$- und $CO_2$-Korrosion. Man setzt sie je nach Provenienz bzw. Zusammensetzung der Rohölemulsion — bezogen auf die Emulsion — in Mengen von 50 bis 1 000 ppm zu.

Die nun folgenden Beispiele erläutern die Erfindung.

## Beispiele

Zur Prüfung der Inhibitorkompositionen wurde ein dynamischer Test (sog. « Wheel-Test ») durchgeführt, eine Methode, womit Korrosionsinhibitoren für die Erdöl- und Erdgasförderung getestet werden.

Als Testcoupons wurden Eisenbleche der Abmessungen 130 mm × 10 mm × 1 mm gewählt. Diese Blechstreifen wurden geschmirgelt, mit Toluol entfettet und gewogen. Als Testmedium diente Testbenzin, das Salzwasser mit 3 % NaCl — bezogen auf Wasser — emulgiert enthielt. Die Emulsion enthielt 50 Gew. % Salzwasser und war mit $H_2S + CO_2$ gesättigt.

Dann wurden 250 ppm — bezogen auf das Gewicht der Emulsion — an Inhibitor zugesetzt.

Die entfetteten und gewogenen Bleche wurden anschließend in die Emulsionen eingebracht und bei 80 °C 16 Stunden einer mechanischen Bewegung (40 Upm mittels einer die Testgefäße drehenden Welle) unterzogen.

Die Testblechstreifen wurden anschließend mit einer inhibierten Säure gereinigt, entfettet und nach Trocknung zur Bestimmung des Gewichtsverlustes gewogen. Die Auswertung erfolgte im Vergleich zum Blindwert (Versuch ohne Inhibitorzusatz).

Die Ergebnisse sind aus den folgenden Tabellen ersichtlich. Hieraus sind neben den Blindwerten auch die Ergebnisse mit Imidazolinen allein (ohne S) und mit Ethoxystearylimidazolin gemäß US-PS 3 062 612 ersichtlich.

Tabelle 1

Verbindung :

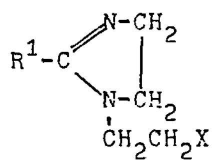

Dosierung : 250 ppm

| | $R^1$ | X | % S⊕ | Abtrag mg |
|---|---|---|---|---|
| Blindprobe | - | - | - | 109,9 |
| | i-$C_8H_{17}$ | $NH_2$ | 0 | Lochfraß |
| | i-$C_{17}H_{33}$ | OH | 0 | 81,3 (Lochfraß) |
| | i-$C_8H_{17}$ | $NH_2$ | 1/5/10 | 37.2/33.6/32.2 |
| | $C_{17}H_{33}$ | $NH_2$ | 5/20 | 30.0/27.3 |
| | $C_{17}H_{33}$ | OH | 1/5/10 | 32.3/24.0/23.5 |
| | $C_{17}H_{35}$ | $NH_2$ | 1/5 | 38.4/33.9 |
| | $C_{17}H_{33}$ | OH | 15/20/30 | 25.6/21.7/19.3 |
| | i-$C_8H_{17}$ | $NH_2$ | 15/30 | 32.8/32.5 |
| Ethoxystearyl-imidazolin | - | - | 10/20⊕⊕ | 68.5/57.3 |

⊕ Eingearbeitet durch Erhitzen mit Imidazolinderivat auf 150 °C innerhalb 2 Stunden (klare Lösungen)

⊕⊕ Nach US-PS 3 062 612 als kolloidale wäßrige Lösung zugemischt

Tabelle 2

Verbindung :

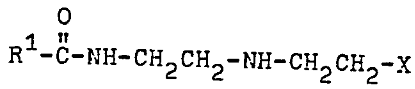

Dosierung : 250 ppm

| R | X | % S⊕ | Abtrag [mg] |
|---|---|---|---|
| Blindprobe | | | 114,9 |
| $C_{17}H_{33}$ | OH | 5/10/20 | 49.6/36.0/28.4 |
| $C_{12}H_{35}$ | OH | 5/10/20 | 43.6/24.9/24.8 |
| Talgfettalkyl | OH | 5/10/30 | 50.6/26.3/23.5 |
| " | $NH_2$ | 1/5/10 | 31.5/28.1/27.8 |
| Rübölfettalkyl | OH | 5/10/50 | 28.5/25.5/26.2 |
| " | $NH_2$ | 1/5/10 | 33.2/31.5/28.5 |
| $C_{17}H_{33}$ | $NH_2$ | 1/5/10 | 29.4/27.0/25.5 |
| $C_{17}H_{33}$ | $NH_2$ | 0 | 95.8 |

⊕Eingearbeitet gemäß Tab. 1

Tabelle 3

Verbindung :

Dosierung 200 ppm

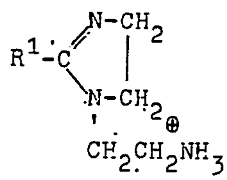

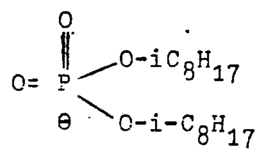

| $R^1$ | % S⊕ | Abtrag |
|---|---|---|
| Blindprobe | | 114,3 |
| $i-C_8H_{17}$ | 0 | 112,5 |
| $C_{17}H_{33}$ | 0 | 113,1 |
| $C_8H_{17}$ | 1/5/10 | 33.0/29.9/32.0 |
| $C_{17}H_{33}$ | 1/5/30 | 28.7/25.0/24.2 |
| $C_{17}H_{35}$ | 1/5/50 | 29.4/28.5/26.3 |

⊕Eingearbeitet gemäß Tabelle 1

**Anspruch**

Inhibitor gegen die Korrosion durch $CO_2$ und $H_2S$ in Wasser-in-Öl-Emulsionen, bestehend aus einen Reaktionsprodukt aus

A) Imidazolinen bzw. deren Salzen der Formel I

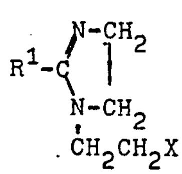

(I)

oder Vorprodukten der Formel Ia

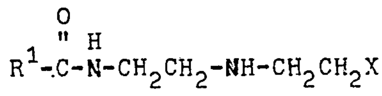 (Ia)

in der bedeuten :

$R^1$ = $C_6$- bis $C_{22}$-Alkyl oder Alkenyl

X' = —OH, —$NH_2$ oder $\overset{\oplus}{NH_3}$ 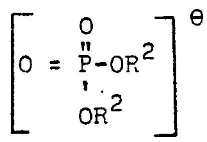

$R^2$ = $C_4$- bis $C_{18}$-Alkyl,

und

B) elementarem Schwefel,

erhalten durch Umsetzen von A) und B) bei 100 bis 200 °C innerhalb 1 bis 3 Stunden in einem Gewichtsverhältnis A) : B) = 100 : 1 bis 2 : 1.

**Claim**

An inhibitor for corrosion caused by $CO_2$ and $H_2S$ in water-in-oil emulsions, consisting of a reaction product of

A) an imidazoline or a salt thereof of the formula I

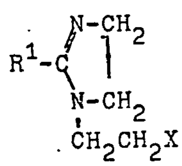 (I)

or a precursor thereof of the formula Ia

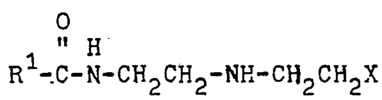 (Ia)

where

$R^1$ is $C_6$-$C_{22}$ alkyl or alkenyl,

X is —OH, —$NH_2$ or $\overset{\oplus}{NH_3}$ 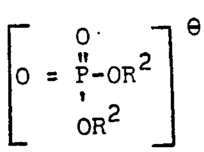

and

$R^2$ is $C_4$-$C_{18}$-alkyl ;

and

B) elementary sulfur,

obtained by reacting A) and B) at 100 to 200 °C in the course of 1 to 3 hours in a weight ratio of A to B of 100 : 1 to 2 : 1.

**Revendication**

Inhibiteur contre la corrosion par $CO_2$ et $H_2S$ dans des émulsions eau-dans-huile, se composant d'un produit de réaction de :

A) Imidazolines ou leurs sels de formule I

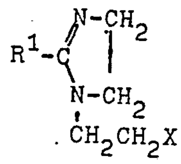

ou progéniteurs de formule Ia

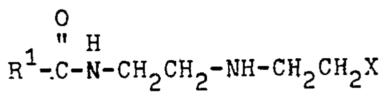 (Ia)

dans lesquelles

$R^1$ = alcoyle ou alcényle en $C_6$ à $C_{22}$

X = —OH, —$NH_2$ ou $\overset{\oplus}{N}H_3$ 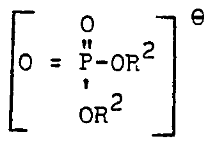 (I)

$R^2$ = alcoyle en $C_4$ à $C_{18}$
et de

B) soufre élémentaire,

obtenu par la mise en réaction de A) et B), à une température de 100 à 200 °C, pendant 1 à 3 heures, dans un rapport pondéral de A) à B) de 100 : 1 à 2 : 1.